# EUROPEAN PATENT SPECIFICATION

(11) **EP 3 697 693 B1**
(45) Date of publication and mention of the grant of the patent: **29.11.2023**
(21) Application number: 18833053.4
(22) Date of filing: 21.12.2018
(51) Int. Cl.: F03H 99/00, B64G 1/40, H02K 41/00

(54) **EFFICIENCY IMPROVEMENTS FOR A MAGNETIC FIELD PROPULSION DRIVE**
MAGNETFELDANTRIEB MIT VERBESSERTER EFFIZIENZ
AMÉLIORATION DE L'EFFICACITÉ D'UN ENTRAÎNEMENT DE PROPULSION PAR CHAMP MAGNÉTIQUE

(43) Date of publication of application: 26.08.2020
(73) Proprietor: Tomorrow's Motion GmbH, 82335 Berg (DE)
(72) Inventor: MAY, Lutz, 82335 Berg (DE)
(74) Representative: LKGLOBAL Lorenz & Kopf Patentanwalt Attorney at Law PartG mbB
(86) International application number: PCT/EP2018/086697
(87) International publication number: WO 2020/126045

(56) References cited:
- WO-A1-2018/062983
- US-A- 5 951 459
- US-A1- 2014 111 054
- Nornikman Hassan ET AL: "RADIO FREQUENCY (RF) ENERGY HARVESTING USING METAMATERIAL STRUCTURE FOR ANTENNA/RECTENNA COMMUNICATION NETWORK: A REVIEW", Journal of Theoretical and Applied Information Technology, 31 March 2018 (2018-03-31), XP055617413, Retrieved from the Internet: URL:http://www.jatit.org/volumes/Vol96No6/ 8Vol96No6.pdf [retrieved on 2019-09-02]
- Anonymous: "Top view of the UMTS, WIFI and LTE isolated multi-antenna system. | Download Scientific Diagram", , 30 January 2013 (2013-01-30), XP055617552, Retrieved from the Internet: URL:https://www.researchgate.net/figure/To p-view-of-the-UMTS-WIFI-and-LTE-isolated-m ulti-antenna-system_fig6_242021420 [retrieved on 2019-09-02]

## Description

### TECHNICAL FIELD

This description generally relates to generating a propulsion force, for example by a propulsion drive. Especially, the description relates to a magnetic field propulsion unit and measures for improving the efficiency of such a drive.

### BACKGROUND

Generally, a propulsion drive provides a propulsion force to move a means of transport for people and/or, in general, cargo.

To assist and to support movement of people, animals, and goods, the humans invented several kinds of wheel-based wagons (horse carriages, steam locomotive, etc.) and other types of machineries (like planes and boats). Vessels like wagons, boats, and planes need a propulsion system to move from one to the next location. It is either muscle power (human muscle or animal muscle), renewable energy (wind, solar energy), or some kind of engine that makes the vessel move.

In this document, the understanding is that the purpose of a "propulsion" system is to move an object. Most of the practiced propulsion solutions are friction based (pressing against the road surface, or propeller pushing against air or water, wind blowing onto a sail, etc.). In the most recent times, some propulsion systems are mass separation based (all types of rocket drives and ion drives, for example).

However, propulsion systems used today are either relying on the presence of friction (the huffs from the horse pushing and scraping against the road surface, or the rotating tire of the car rubbing against the street surface, for example) or they use some kind of physical mass separation process whereby an expendable mass (like a gas, ions, jet of water) is accelerated away from the object that needs to be moved. Of course, all propulsion systems also rely on a source of energy to power the propulsion system.

WO 2018/062983 A1 describes an ultra-high-frequency electromagnetic motor. The operation of the ultra-high-frequency (UHF) magnetic motor is based on generating extremely short and powerful electric, magnetic or electromagnetic field pulses and separating or disassociating said field pulses from the originating source, so that subsequently the emitting device and a device that is the objective or target, a support structure that supports both devices and another element connected to said support structure are for an instant disassociated from the field, waiting for the pulsed field to reach the objective or target. At that moment, the element emits a field with a polarisation that allows the exertion of a force that attracts or repels the field pulse, with respect to the objective or target and consequently with respect to the motor of which they form part as a unit, both the emitter and the target being joined by a support structure. Adequate synchronisation in the emission of the field pulses is controlled by a set of electronic circuits formed by a power module, a control unit based on a microcontroller, power sources, banks of capacitors and overshoot-suppression circuits. All these circuits are connected to form a pulse generator or continuous signal generator that functions as such, operating between the UHF and super-high-frequency (SHF) bands.

Nornikman Hassan et al, "Radio frequency (RF) energy harvesting using metamaterial structure for antenna/rectenna communication network: A review", Journal of Theoretical and Applied Information Technology, 31 March 2018, includes a literature review of radio frequency energy harvesting and of techniques for improving the performance of radio frequency device designs. Performance, Material, dimension, return loss, and the resonant frequency of the antenna are compared for the different techniques.

US 5 951 459 A describes a magnetic coil for pulsed electromagnetic fields (PEMF). A portable electronic PEMF apparatus comprises a PEMF coil, power supply, and electronic switching means contained therein. The power supply along with the switching means provide periodic electric power to the PEMF coil. The PEMF coil comprises multiple turns of a conductive wire around a core with an elongated cross section. The core comprises a magnetic shield layer of materials such as mu metal or soft iron. The power supply comprises a battery, a regulated voltage source and unregulated voltage source from the battery and electronic switching circuit, powered by the regulated voltage, for electrically connecting the unregulated voltage source to the coil. The electronic switching circuit is tuned to periodically provide power to the coil at a frequency to generate a non-inverting, varying electromagnetic field from the coil.

### SUMMARY

There may be a need to increase the degree of efficiency of a magnetic propulsion drive of the type described herein.

In short, this document describes a third alternative for a more advanced propulsion which is not friction based, nor does it require the acceleration of masses (in the most common sense) that will be pushed away from the object that needs to be moved.

This technology may be named Magnetic Cloud Accelerator, or simply MCA. The objective of an MCA drive system is it to propel (move) a vessel (at which the MCA drive has been installed) in any direction regardless of where the vessel has been placed: in the outer space, flying in the air, or is on the surface of a planet/moon.

The invention is defined by the appended claims.

An MCA drive unit provides a force, pointing in a selected direction, that acts on a vessel that has to be moved. The directional force is created from within the MCA drive. The MCA technology is based on magnetic principles and therefore requires an electrical power source that has to be carried by the vessel where the MCA drive has been installed.

Basically, an MCA drive module consist of an electric power source, at least two or more magnetic field generators (e.g., inductors, antennas), and some electronics. To move heavier objects, an MCA drive module with more than two inductors, or more than one MCA drive modules may be needed. The inductors interact with each other to create a propulsion force in a defined direction. Preferably, the inductors are mounted in such way that they keep a constant distance to each other.

The description addresses questions of efficiency like increasing the propulsion force and recuperation of energy.

According to the invention, a magnetic field propulsion unit comprises a first magnetic field generating device, a second magnetic field generating device, an energy supply unit, and a control unit. The first magnetic field generating device is configured to generate a magnetic field. The second magnetic field generating device is also configured to generate a magnetic field. The energy supply unit is configured to provide the first magnetic field generating device and the second magnetic field generating device with electrical energy. The control unit is configured to control the energy supply unit in accordance with a predefined switching scheme. The second magnetic field generating device is a rod-like antenna or a coil that lies in a plane in which also the first magnetic field generating device lies. The control unit is configured to supply the first magnetic field generating device with electrical energy so that a first magnetic field surrounding the first magnetic field generating device is generated; supply the second magnetic field generating device with electrical energy so that a second magnetic field surrounding the second magnetic field generating device is generated; wherein a switch-on operation to supply the second magnetic field generating device with electrical energy takes place a predetermined period of time after a switch-on operation to supply the first magnetic field generating device with electrical energy and while the first magnetic field generating device is still supplied with electrical energy; interrupt the energy supply to the first magnetic field generating device after the switch-on operation to supply the second magnetic field generating device with electrical energy and while the second magnetic field generating device is still supplied with electrical energy, so that the second magnetic field repels the first magnetic field generating device and thus generates a repelling force to move the magnetic field propulsion unit. The magnetic field propulsion unit comprises an energy harvesting unit that at least partially surrounds the first magnetic field generating device, wherein the energy harvesting unit comprises at least one coil that is configured to generate electric current by induction when the first magnetic field is generated. The energy harvesting unit is C-shaped and a line of sight from the first magnetic field generating device to the second magnetic field generating device is free of the energy harvesting unit.

As will be described in more detail below, the first and second magnetic field generating devices are supplied with electrical energy at specific points of time. Thus, the magnetic fields generated by the first and second magnetic field generating devices are emanated in a predetermined order. The magnetic field generated by the second magnetic field generating device repels the magnetic field generated by the first magnetic field generating device, for example when interrupting the energy supply to the first magnetic field generating device. This process can be repeated. In this manner, the propulsion force is generated in a pulsed mode. The strength of the propulsion pulse may depend on the intensity of the magnetic field which itself depends on the electrical energy supplied to the first and second magnetic field generating devices.

The first magnetic field generating device may be a coil or a rod-like antenna configured to emit a magnetic field when supplied with electrical energy. The energy supply unit is configured to provide electrical energy to the first and second magnetic field generating devices. The energy may be supplied in a pulsed or periodic manner, wherein the energy supply unit may determine the pulse duration and the time between two subsequent pulses.

The first magnetic field generating device emanates a magnetic field and the magnetic field lines spread spherical in all directions. At least a part of the magnetic field spreads towards the second magnetic field generating device. The magnetic field emanated by the first magnetic field generating device repels the magnetic field generated by the second magnetic field generating device and thus generates a force that can be used to move an object. Particularly, the second magnetic field generated by the second magnetic field generating device moves the magnetic field propulsion unit and any other objects that are directly or indirectly fastened to it. The moving force is generated because the first magnetic field generated by the first magnetic field generating device is no longer anchored to the first magnetic field generating device and can be pushed away by the second magnetic field.

According to the invention, the magnetic field propulsion unit comprises an energy harvesting unit that at least partially surrounds the first magnetic field generating device, wherein the energy harvesting unit comprises at least one coil that is configured to generate electric current by induction when the first magnetic field is generated.

Thus, the energy harvesting unit is arranged and configured to convert at least a part of the magnetic field emanated by the first magnetic field generating device into electric current. Preferably, the energy harvesting unit is located such that it converts at least some of those parts of the magnetic field into electric current that are not directed towards the second magnetic field generating device. In other words: the first magnetic field that is directed towards the second magnetic field generating device is used to generate a propulsion force while at least parts of the magnetic field that are not spreading towards the second magnetic field generating device are recuperated.

According to the invention, the energy harvesting unit is C-shaped and a line of sight from the first magnetic field generating device to the second magnetic field generating device is free of the energy harvesting unit.

The energy harvesting unit may also be arranged hemispherical or substantially hemispherical with respect to the first magnetic field generating device. The second magnetic field generating device is arranged opposite to the first magnetic field generating device with the energy harvesting unit being shaped and arranged such that no parts thereof are arranged between the first and second magnetic field generating devices in order not to dampen or eliminate the magnetic field that is used to generate the propulsion force.

According to a further embodiment, the electric current generated by the energy harvesting unit is provided to the energy supply unit.

Thus, the energy of the magnetic field of the first magnetic field generating device is recuperated and provided to the energy supply unit to reduce the effective power consumption of the propulsion unit.

According to a further embodiment, the first magnetic field generating device comprises a first coil that is configured to generate a magnetic field when being supplied with electrical energy.

The first magnetic field generating device is a coil having at least one winding. Preferably, the coil is circular. Preferably, the coil is an air coil without a core. Preferably, the coil has a diameter between 10 mm and 200 mm.

Alternatively, the first magnetic field generating device may be an inductor of some sort or an antenna.

While in theory it is possible to use inductors (for example a wire-based coil) with a core that has magnetic properties, such inductors with a core have the disadvantage that their reaction time to high frequencies is very slow. The coils referred to in this document are air-coils that have a very few windings only, for example one to ten windings per coil.

According to a further embodiment, the first magnetic field generating device comprises a second coil that is configured to generate a magnetic field when being supplied with electrical energy, wherein the second coil is oriented parallel to the first coil, and wherein the magnetic field of the second coil is generated such that it repels the magnetic field of the first coil.

The first and second coils may be equal, e.g., same number of windings, same diameter, same inductivity, same wire thickness, etc. The first and second coils are arranged such that the magnetic fields of the first and second coils repel each other. Thus, the magnetic field of the first coil is pushed away from the second coil by the magnetic field of the second coil. In other words, the magnetic field of the first coil is pushed into a hemisphere that is opposite to the second coil. Thereby, the intensity of the magnetic field of the first coil is higher in this hemisphere. Preferably, the second magnetic field generating device is arranged in this hemisphere so that the intensity of the magnetic field of the first coil at the second magnetic field generating device is increased.

According to a further embodiment, the first coil is arranged between the second coil and the second magnetic field generating device, wherein the second magnetic field generating device is perpendicular to an interconnecting line between the first coil and the second coil.

The second magnetic field generating device is a rod-like antenna, i.e., is a linear or substantially linear element. The longitudinal direction of the second magnetic field generating device is perpendicular or substantially perpendicular with respect to the interconnecting line between the first and second coils of the first magnetic field generating device.

The interconnecting line may be drawn between the closest points of the first and second coils or from center to center of the first and second coils. In case of circular coils, the interconnecting lines according to these two options coincide.

The rod-like antenna may be located such that a center point of the rod-like antenna is intersected by the prolonged interconnecting line. In other words, the rod-like antenna is centered in its longitudinal direction with respect to the prolonged interconnecting line.

According to a further embodiment, the second magnetic field generating device is parallel to an interconnecting line between the first coil and the second coil.

The second magnetic field generating device is spaced apart from the first and second coils but is, however, oriented in the same direction than the interconnecting line. In other words, the second magnetic field generating device is placed alongside the first and second coils such that the rod-like antenna is arranged in a region where the magnetic fields of the first and second coils of the first magnetic field generating device adjoin each other. Thus, the second magnetic field generating device is exposed to the magnetic fields of the first and second coils instead of only the magnetic field of a single coil. The overall intensity of the magnetic field lines may be increased thereby so that the generated force is higher.

According to a further embodiment, the second magnetic field generating device is centered along its longitudinal direction between the first and second coil.

In this embodiment, the center point of the second magnetic field generating device in its longitudinal direction is equally spaced apart from the center points of the first and second coils. This center point of the second magnetic field generating device is opposite to the center point of the interconnecting line.

According to a further embodiment, the magnetic field propulsion unit further comprises a shielding unit that is C-shaped and partially surrounds the first magnetic field generating device, wherein the energy harvesting unit is arranged at least partially in the space enclosed by the shielding unit, and the shielding unit comprises electrically conductive material.

For example, the shielding unit may be made at least partially of electrically conductive material and/or may comprise an electrically conductive coating.

The shielding unit may alternatively be shaped hemispherical so that the first magnetic field generating device is at least partially arranged within the hemisphere. In this embodiment, the energy harvesting unit is arranged at least partially in the space enclosed by the shielding unit. The shielding unit shields the surrounding of magnetic fields. Of course, the shielding unit allows the magnetic field pass towards the second magnetic field generating device through its opening.

According to a further embodiment, the first magnetic field generating device is a rod-like antenna.

Of course, the first magnetic field generating device can be similarly shaped like the second magnetic field generating device, i.e., a rod-like antenna.

According to a further embodiment, the magnetic field propulsion unit further comprises a printed circuit board, PCB, wherein the first magnetic field generating device and the second magnetic field generating device are arranged on a surface of the PCB.

The first and second magnetic field generating devices are particularly arranged on the same surface of the PCB. Thus, the propulsion force resulting from the magnetic field of the first magnetic field generating device is transferred to the PCB. The propulsion force may be transferred from the PCB to any object by suitable mechanical attachment or mounting devices. For example, the PCB may be mounted to an object to be moved by screws, rivets, bolts, adhesives, etc. The propulsion force generated by the magnetic field propulsion unit is transferred to the object to be moved.

According to a further embodiment, the first magnetic field generating device and/or the second magnetic field generating device are made up by conductive tracks of the PCB.

In that case, the coil and the antenna extend in a plane that is defined by a surface of the PCB.

According to a further embodiment, the rod-like antenna is perpendicular to a surface of the PCB.

For example, the first and second magnetic field generating devices are produced as separate entities and mounted to the surface of the PCB. The first and second magnetic field generating devices are mechanically attached to the PCB and electrically connected to the energy supply unit, for example by using conductive tracks of the PCB.

According to a further embodiment, for each conductive line, the control unit is configured to repeatedly carry out the following cycle, which cycle may be referred to as switching period: supply a positive current for a first period of time, transition the conductive line to a non-conductive state for a second period of time, supply a negative current for a third period of time, transition the conductive line to a non-conductive state for a fourth period of time.

Preferably, a duration of the third period of time is equal to a duration of the first period of time. Preferably, a duration of the fourth period of time is equal to a duration of the second period of time.

The cycle described in this embodiment is carried out for every conductive line. However, the cycle is phase-shifted for neighboring conductive lines, i.e., while a first conductive line is supplied with a positive current (first period of time), a second conductive line is in the non-conductive state (second period of time). In other words, the cycle between neighboring conductive lines is phase-shifted by 90° (one quarter of Pi).

According to a further embodiment, the switching period of a first conductive line is phase-shifted for a quarter period with respect to a switching period of a second conductive line, wherein the first conductive line and the second conductive line are arranged next to each other with a predetermined distance in between, such that the magnetic field propulsion unit generates a force pulse in a direction from the first conductive line to the second conductive line.

According to a further embodiment, the coils are planar coils. Preferably, the coils are arranged in the same plane. More preferably, all coils of the magnetic field generating device are arranged in the same plane.

According to a further embodiment, the conductive lines are arranged in a matrix-like structure with multiple lines and columns, wherein the conductive lines in one column or in one line are controlled in accordance with the switching period referred to above, so that any line and any column may be selectively used as a magnetic field propulsion unit.

According to a further embodiment, the contact breaker arrangement comprises multiple contact breakers, wherein at least one contact breaker is assigned to each conductive line and arranged such that the contact breaker breaks the conductive line so that a flowing current through the conductive line is prevented.

The contact breaker is arranged such that it transitions the coil in an open state when the contact breaker is in the open state. In other words, the continuous wire of the coil is interrupted by the contact breaker. The contact breaker may be a switch. The contract breaker may be arranged close to the conductive wire of a coil so that the interconnecting line between the contact breaker and the coil is much shorter than the circumference of the coil. For example, the length of the interconnecting line between the coil and the contact breaker is less than 25% of the circumference of the coil, more preferably less than 20% of the circumference of the coil, more preferably less than 15% of the circumference of the coil, and even more preferably less than 10% of the circumference of the coil.

According to a further embodiment, a contact breaker is a semiconductor element, preferably a transistor, that can selectively be in an electrically conductive state or in an electrically non-conductive state. The contact breaker interconnects a first section of the conductive line with a second section of the conductive line so as to form a continuous conductive line when the semiconductor element is in the electrically conductive state.

For example, one coil may be separated in two sections that are interconnected by two contact breakers. If both contact breakers are in a closed state, the two sections establish one closed loop of a coil. If one contact breaker is open, the wire of the coil is a C-shaped wire that is open at one end (where the contact breaker is open). Of both contact breakers are open, the former coil now is two separated sections of a wire.

In other words, by providing at least two or multiple contact breakers that are arranged circumferentially at a coil to interrupt the continuous wire of the coil in multiple sections, the properties of the coil can be selectively changed from being a coil to being separate sections of a wire.

According to a further embodiment, at least one of the conductive lines is tubular and has an inner chamber that is filled with a semi-conductive fluid, preferably a semi-conductive liquid.

Thus, the electric properties of the tubular line may be changed by changing the properties of the liquid from electrically conductive to electrically non-conductive. In this embodiment, it may not be necessary to physically interrupt the conductive line.

According to a further aspect, a propulsion drive with a magnetic field propulsion unit as described herein is provided. The magnetic field propulsion unit is arranged such that a force pulse is generated in a direction of the longitudinal axis.

Such a propulsion drive can be used to exert a propulsion force to a vehicle or element. For this purpose, the propulsion drive is attached or mounted to the vehicle or element.

According to a further aspect, an electromagnetic field propulsion unit is provided. The electromagnetic field propulsion unit comprises an electromagnetic field generating device, an energy supply unit, a control unit. The electromagnetic field generating device comprises multiple generating units which are configured to generate an electromagnetic field. The energy supply unit is configured to provide the electromagnetic field generating device with electrical energy, preferably alternating current at a given frequency. The control unit is configured to selectively pass the electrical energy from the energy supply unit to the generating units. The control unit is configured to control the energy supply unit so that the process of supplying energy to each individual generating unit is controlled. The multiple generating units are rod-shaped and arranged along a linear axis and the generating units are parallel to each other. The control unit is configured to supply a first generating unit with electrical energy so that a first electromagnetic field is generated, break the energy supply to the first generating unit, and supply a second generating unit with electrical energy so that a second electromagnetic field is generated. The second generating unit is supplied with electrical energy a predetermined period of time after the energy supply to the first generating unit is broken.

According to an embodiment, the multiple generating units are antennas that have a same length and are arranged along a common line and are arranged equidistantly with respect to each other.

These and other aspects of the present invention will become apparent from and elucidated with reference to the exemplary embodiments described hereinafter.

### BRIEF DESCRIPTION OF THE DRAWINGS

Figs. 1 to 17 schematically show the principle of a magnetic propulsion drive.
Fig. 18 schematically shows a magnetic field propulsion unit.
Fig. 19 schematically shows a magnetic field propulsion unit.
Fig. 20 schematically shows a magnetic field propulsion unit.
Fig. 21 schematically shows a magnetic field propulsion unit.
Fig. 22 schematically shows the relative placement of coils in a magnetic field propulsion unit.
Fig. 23 schematically shows a magnetic field propulsion unit.
Fig. 24 schematically shows the magnetic field strengths of a magnetic field generating device.
Fig. 25 schematically shows the intensity of the magnetic field of the first magnetic field generating device.
Fig. 26 schematically shows the magnetic field strengths of a magnetic field generating device.
Fig. 27 schematically shows three different design options of a magnetic field propulsion unit.

### DETAILED DESCRIPTION OF THE INVENTION

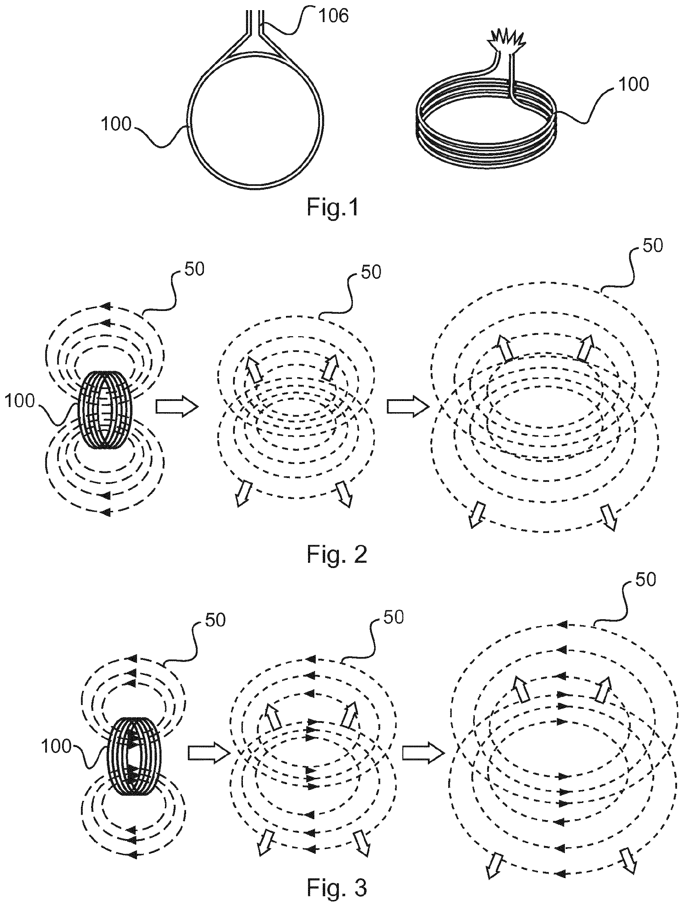

As an introduction to magnetic propulsion drives, Figs. 1 to 17 generally describe the principle of the device described herein. However, in the description above and also in the following embodiments, reference may be made to some or all of the elements described in Figs. 1 to 17. Thus, the elements described in this introductory portion of Figs. 1 to 17 may be implemented in the other embodiments in correspondence to their function.

Fig. 1 shows an air coil in two different views. The air coil is made of a wire and has at least one complete winding. Electrical energy is supplied to the air coil via energy supply lines 106.

Generally, when supplying electrical energy to the coil 100, a magnetic field is generated surrounding the wire of the coil. When the flow of the electric current in an inductor will be cut-off suddenly, then a counter-electromotive force (also known as back electromotive force, back EMF) will cause the built-up of a high voltage at the energy supply lines 106 (two leads) of the inductor 100. Depending on the inductor specifications and the electric current that has been flowing through the inductor, the voltage built-up can be high enough to create electric sparks, as shown in Fig. 1 on the right. This phenomenon is identical to what is happening in an ignition coil (used in some types of combustion engines).

The magnetic field that surrounds the inductor is using the conductive wire in the coil to create a current flow (in the opposite direction) that will built-up to a very high voltage at the energy supply lines 106 of the inductor (assuming that the two connection wires of the inductor are not connected to any circuit). The voltage built-up will keep going until either the previously generated magnetic field has been used-up (collapsed) in this process or until a spark is flying across the inductor lead-ends (shortening the coil circuit). The electric spark will then allow a current to flow in the coil until the generated voltage will drop to a certain lower level.

After the process of creating the magnetic field stops (for example by cutting-off the electric supply current), the created magnetic field that surrounds the inductor begins to transfer its energy back into the inductor, and with this creates an electric current flow (back EMF). This process of the back EMF creation takes time, even when it is only a few hundred pico seconds. However, it is to be noted that the magnetic flux structure exists on its own after the electric current supply has been cut-off and the magnetic flux structure is able to utilize its energy for a short time after.

As long as the inductor is powered by an external electric current source via the energy supply lines 106, the created magnetic field structure is anchored (held in place) to the center of the inductor 100. When the external electric current supply is cut-off, the created magnetic field structure is no longer anchored to the source (the electrically powered inductor 100). The magnetic field structure is now free to move. However, any movement (changing of its position) of a magnetic field at the presence of an electric conductive object (surface, wire) will create an electric current flow in that object, thus transforming the energy of the magnetic field back to electrical energy. Furthermore, any attempted movement of the magnetic flux structure will happen with a speed that is near the lightspeed. The larger the magnetic field structure is, and the lower the impedance in the conductive object is, the larger the electric current flow in the conductive object (for a short time). The back EMF will rapidly drain the energy stored in the magnetic field structure (however, it will take some time, even when only a little). By the way, instead of magnetic field structure the term "magnetic cloud" is often used.

When the inductor (air coil 100) no longer is powered by an electric current, and when the physical properties of the air-coil will change in such way that it will not be possible for the creation of a back EMF (or counter-electromotive force), then the magnetic field created by the electric current is no longer bound (anchored) to the air-coil. This is not the case for a typical inductor (or coil). Basically, this means the inductor has to disappear at an instant (also here referred to as "deactivating" the inductor).

For the MCA technology to work, the process caused by the counter electromotive force has to be prevented either by choosing an appropriate design of the conductive line 100 or by making the inductor "disappear" (eliminate or reduce its effect of transforming the energy of the magnetic field into electric current) at the same time the supply current will be cut-off.

Fig. 2 exemplarily shows how a coil 100 generates a magnetic field 50 when being supplied with electric current. It is furthermore schematically shown in Fig. 2 how magnetic fields propagate in space. Fig. 2 shows what happens when a coil just disappears after it has generated a magnetic field. Of course, a coil cannot just physically disappear. However, the explanations given below show how the coil can functionally disappear and how the magnetic field is used to generate a propulsion force. Functional disappear means that the coil changes its properties so that it no longer acts like before.

When cutting off the electric power source to an air-coil, and when ensuring that the property of the air-coil has changed in such way that it is no longer conductive object (drastically increasing the impedance of the entire air-coil device so that what remains takes no longer part in the dynamics that surrounds the magnetic field generated), then the magnetic field structure 50 (the magnetic field cloud generated by the air-coil while under electric power) will expand outwards in all directions and will disperse with nearly the speed of light.

In Fig. 2 on the left, it is shown that an electric current flowing through the coil 100 (in this specific example an air-coil) creates a magnetic field structure 50 similar to the shape of an apple that is bound (anchored) to the powered coil 100. After the electric power has been cut-off and the inductor lost its properties as a conductive object, the magnetic field surrounding the inductor is no longer anchored to the position of the former inductor, and therefore begins to expand outwards rapidly while dispersing, as shown in Fig. 2 in the middle. The magnetic field loop (originally shaped as a toroid) expands in all directions with near the speed of light. The field strength of the magnetic flux lines gets rapidly smaller the larger the magnetic toroid is getting, as shown in Fig. 2 on the right.

Although the term "dispersing" has been used herein, energy will not just simply disappear. However, whenever the flux lines of the outwardly expanding magnetic structure come across a conductive object, the process of the back EMF creation will happen. Only in a truly empty universe (space) the magnetic field structure will expand continuedly without losing any of its energy.

Fig. 3 schematically shows the magnetic field lines of a magnetic field generated by a coil and what happens to the magnetic field when the coil instantly disappears. When an electric current is flowing through the inductor 100, then the generated magnetic field that surrounds the inductor has a three-dimensional shape similar to an apple. This magnetic field structure is anchored to the center of the inductor 100. As soon as the inductor has been deactivated (there will be no conductive structure present where the magnetic field structure was anchored before), the magnetic field structure will rapidly expand outwards in all direction, as shown in the schematic drawing in the middle. In the way the apple like structure is expanding inwards and outwards (basically into all directions with the same speed at the same time) the formerly apple like structure (magnetic field cloud) will convert into a doughnut shaped structure (or toroidal shaped) that expands outwards, as shown in Fig. 3 on the right.

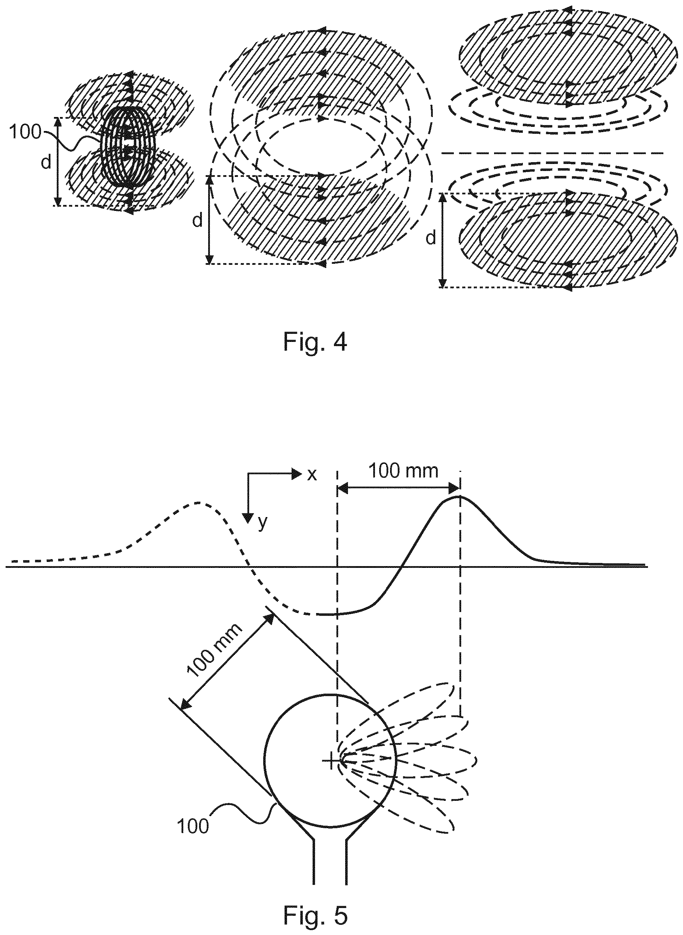

Fig. 4 shows the formation of the toroidal magnetic field shape as a consequence of the apple like shape expanding inwards and outwards simultaneously. While the diameter of the doughnut shaped magnetic field structure expands rapidly, the diameter d of the field structure (the wall thickness of the magnetic doughnut, here called "d") remains constant and this field structure propagates in space outwardly, i.e., away from the opposite side of the field structure.

Fig. 5 shows the magnetic field intensity with respect to the distance from the center of the coil 100. In this example, the air coil diameter is about 100 mm and the magnetic field intensity profile is measured in the Z-Axis direction (in axial direction of the inductor). The intensity will have one field intensity maximum in negative direction and one field intensity maximum in positive direction (when taking measurements starting from the center of the air coil and then moving into one direction outwards going in the X-axis). The distance between the negative and the positive maximum is around 100 mm and is constant (described before as "d"). The number of wire-turns of the air-coil used for this example is less than 10 turns. However, the number of wire-turns is to be understood as a non-limiting parameter.

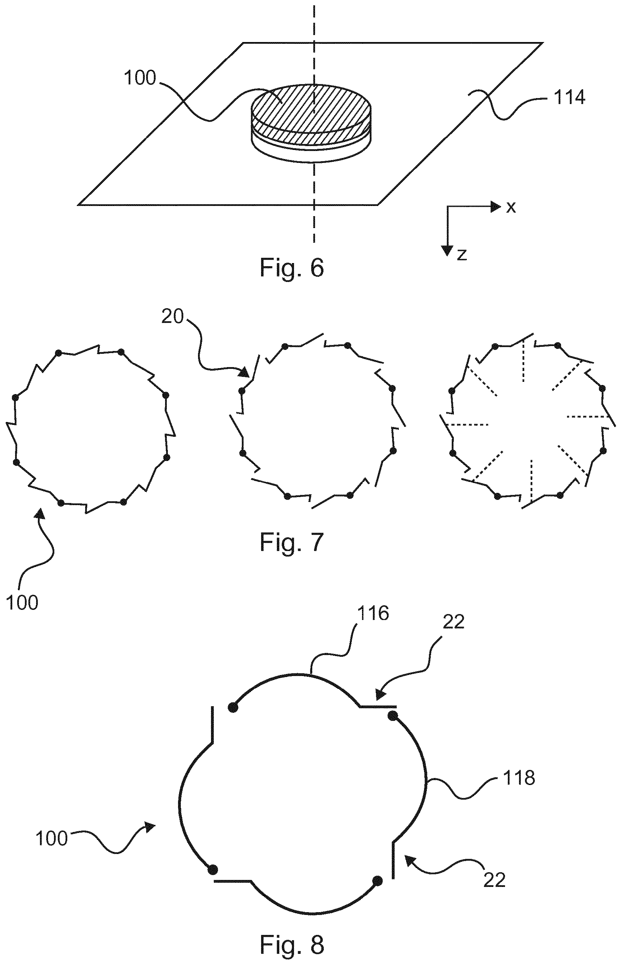

Fig. 6 shows a planar coil 100 that is located in a plane 114. The Z-Axis extends in axial direction of the coil 100. The Z-Axis is the direction of measuring the magnetic field intensity shown in Fig. 5.

Since the magnetic field is symmetric, the magnetic field intensity measured in the Z-axis (as the drawing shows in Fig. 5) is identical in any direction in the X-axis plane of the air-coil, starting at the center.

Just for illustrating the principle of the MCA, Figs. 7 to 9 show an example how the coil 100 can be made to functionally disappear. Fig. 7 shows a coil 100 with multiple switches 20 arranged such that the coil can be interrupted to be single individual circumferential segments that are not interconnected to each other. The switches are controllable and can change from an open state to a closed state. In the open state, the switches are electrically non-conductive. In the closed state, the switches are electrically conductive. When the switches are closed, the coil 100 has certain properties, it basically can generate a magnetic field when supplied with electric current. However, if the switches (at least two of them) are in the open state, the properties of the coil (more exactly: of the individual segments resulting from the switches being in the open state) are different from the properties when all of the switches are in the closed state.

There are several design options that can be chosen to achieve the goal of changing the property of an inductor is such way that the function of an inductor no longer exists or significantly changes. Fig. 7 shows a principal idea of such a convertible coil, i.e., a coil that can change its electromagnetic or magnetic behavior. However, besides making the function of the inductor disappear, it is also important to increase the impedance of the remaining object to prevent the built-up of the back EMF. When referring to making a coil disappear, this is to be understood as changing the electromagnetic or magnetic properties of the coil.

Fig. 7 shows an example to make the air-coil change its properties in an instant. In this example, eight mechanical on-off switches are used, that, when the switches are connected to each other (all switches in the closed state, Fig. 7 on the left) and when the switches are in the "on" condition will form an inductor. When the eight switches go from the "on" state into the "off' state (Fig. 7, middle), then the function of an inductor has disappeared at an instant. The eight switches in this example will be instructed what to do by a mechanical or electronical control mechanism which is referred to as control unit. Whatever this mechanism may be, great care has to be taken that this switch control mechanism does not create another opportunity for the back EMF to act on.

The control unit may be a microprocessor or a computer that is configured to provide signals based on which the switches change their state from open to close or vice versa.

Fig. 8 shows an air coil 100 having four switches 22 that are arranged to split up the coil into four segments or sections of which a first section 116 and a second section 118 are indicated by reference numbers. When the four switches are closed, an air coil exists with its specific electromagnetic properties. When all four switches are open, four individual and separated sections of the coil wire exist.

The switches may be arranged locally so that their internal wiring is part of the coil and the circumferential shape of the coil wire is substantially provided.

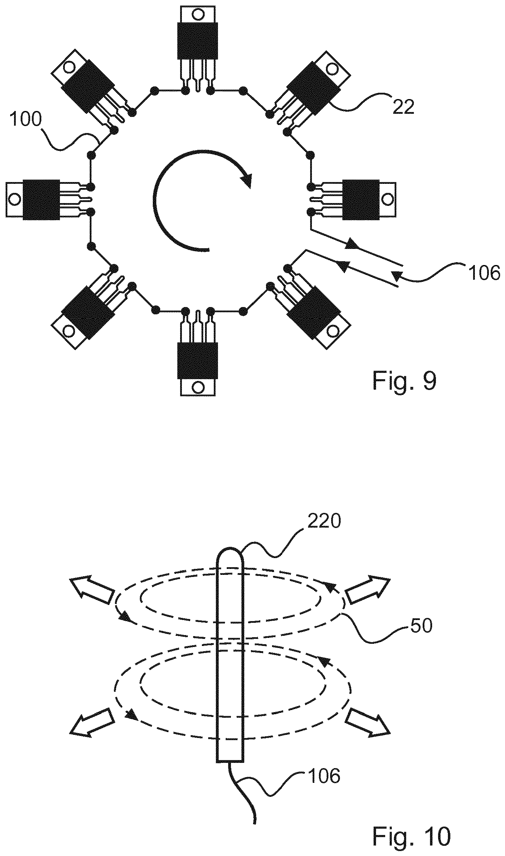

Fig. 9 shows a coil 100 with eight solid-state switches that are arranged equidistantly at the circumference of the coil 100. Two neighboring switches are arranged at an angle of 45° with respect to the center of the coil 100.

In contrast to mechanical switches, a far better and more practical option is to use very low impedance, high power capable solid-state switches. The important specifications for such a solid-state switch are very short switch-on and switching off times and a very low impedance in the closed state.

Fig. 10 shows a rod antenna which is generally referred to as magnetic field generating device 220. The rod antenna generates a magnetic field 50 when being supplied with a suitable electric signal via energy supply line 106.

Instead of a wire-wound-coil-style inductor as shown in Fig. 1 through 9, a simple radio antenna 220 can be used as well. Depending on the speed (operational frequency) with which the antenna style inductor will be operated, the absolute length of the antenna-style inductor can be relatively short. Assuming that the operational frequency will be 1.5 GHz, the optional antenna length will be 50 mm (one quarter of c/f).

The generated magnetic field structure can expand freely in any direction after the power signal has been applied to the antenna 220.

One advantage when using an antenna instead of a coil is that there will be only a relatively small or no back EMF when the signal power to the antenna has been cut off. The magnetic structure is free to expand in the horizontal direction in any direction. There is no need to be concerned about a circuit that makes the inductor disappear.

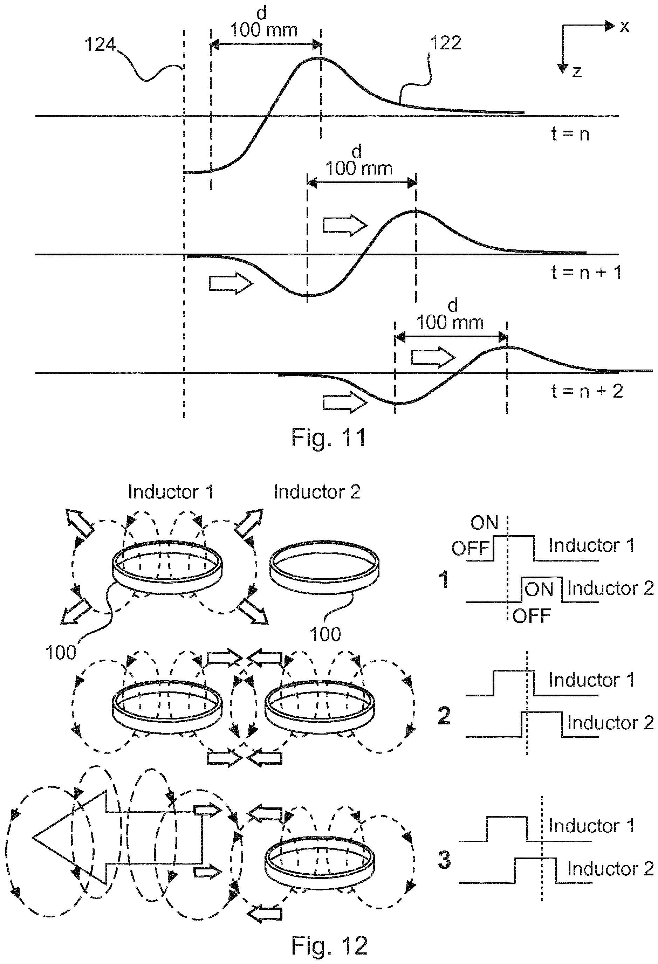

Fig. 11 exemplarily shows propagation of a magnetic field and its intensity as a function of time. The magnetic field intensity is shown at three different points of time, namely n, n+1, and n+2. The magnetic field intensity 122 is shown with respect to the center of the inductor 100.

The schematic representation in Fig. 11 is shown based on the assumption that the function of an inductor will disappear at an instant. In such a case, the created magnetic field will travel outwards in all directions (mainly at the horizontal plane in relation to the air-coil).

As already shown in Fig. 2 to 4, the magnetic field is now no longer locked or anchored to the center position of the air-coil and expands in all directions. By doing so, the field intensity is rapidly diminishing with increasing distance to the center of the air-coil. Fig. 11 shows the field intensity status 122 at three successive time events (n, n+1, and n+2). The physical dimension of the magnetic 'wave' "d" remains constant (in this example 100 mm from the positive field intensity maxima to the negative field intensity maxima).

In the above chosen example of an inductor with a diameter of 100 mm, the radial length (in the X-axis direction) of the magnetic field wave (positive maxima to negative maxima) that expands away from the originating location (after the inductor has been factually deactivated) has a length of 100 mm that is similar to the diameter of the inductor. This is equivalent of 180 deg of a full cycle wave. Meaning that the complete length of a full cycle wave (equivalent to 360 deg) is about 200 mm long (2 x d).

Taking the speed of light, with which this magnetic wave expands outwards, the 200 mm wavelength is equivalent to a wavelength-time of 660 pico-seconds (or in reciprocal form: equivalent to a 1.5 GHz frequency).

To achieve maximum system efficiency (in the meaning of the propulsion force) the electric pulse with which the inductor will be powered will have a length of only a few hundred pico-seconds (pulse time). However, this pulse time applies to a coil with 100 mm diameter. When choosing a smaller diameter for the inductor then the pulse time will get smaller (in a ratio metric fashion), or with other words, the operational frequency will increase. Reciprocal, when choosing a much larger diameter for the inductor, then the pulse time will also increase.

Fig. 12 shows two coils 100 named inductor 1 (first magnetic field generating device) and inductor 2 (second magnetic field generating device). The two coils are placed in the same plane, i.e., their axes are parallel, and they are arranged at the same vertical level.

At phase 1 (upper drawing), an electric current will flow through the first inductor (air coil 1, on the left). An outward acting magnetic flux structure (in the shape of an apple) builds-up and is anchored to the center of inductor 1. At phase 1, the power switch of inductor 1 is closed, i.e., electric power is supplied to inductor 1, and the power switch of inductor 2 is open, i.e., no electric power is supplied to inductor 2. The state of the power switches is indicated by the vertical dotted line in the drawing on the right at phase 1.

At phase 2 (middle drawing), an electric current is flowing through both inductors 1 and 2. As the current flows in the same direction (inductor 1 and 2), the built-up magnetic structures are repelling each other. The power switches of both inductors are closed, see status of the switches in the drawing on the right of phase 2.

At phase 3, inductor 1 will deactivate (will disappear, its power switch is open). There will be no current flowing through the inductor 1. The magnetic structure created by inductor 1 has no anchor point anymore and will rapidly expand and will quickly reduce its field intensity. The repelling force from the still powered inductor 2 is pushing the magnetic flux structure from the former inductor 1 away. A very small propulsion force will act on the inductor 2 pushing it towards the right of the drawing.

In the here used example (100 mm diameter coil), the whole process of phase 1 to phase 3 will take less than 1 ns (one Nano second). This process (phase 1 to phase 3) can be repeated around 1 billion times (10E9) per second.

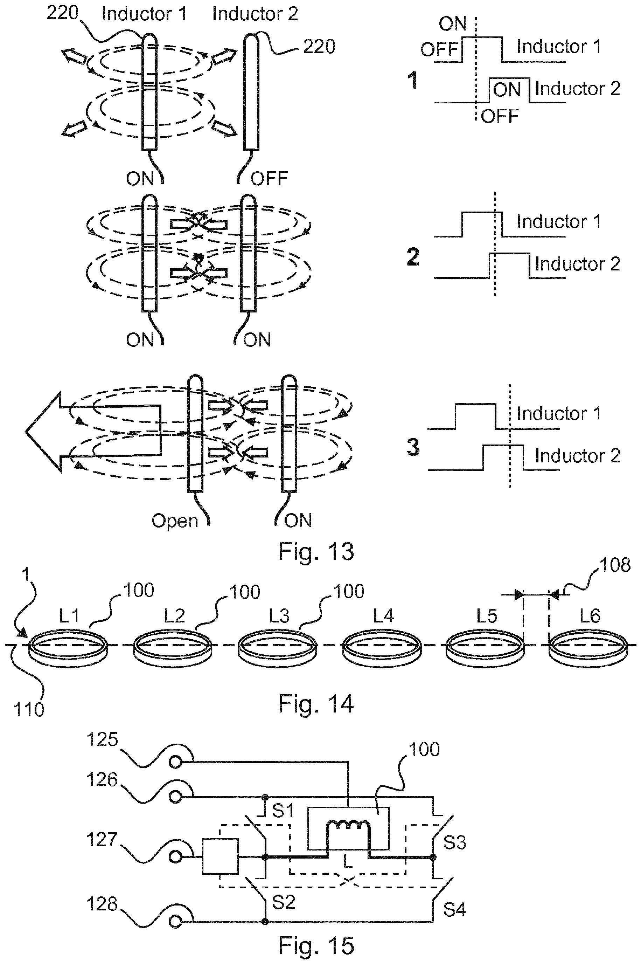

Fig. 13 describes a similar design to Fig. 12. However, in Fig. 13, rod antennas are used instead of air coils. The principles described with reference to Fig. 12 also apply to the device shown in Fig. 13 and the rod antennas 220 are controlled in a similar manner, see sequences of power supply on the right of the drawings for the three phases of Fig. 13. This sequence corresponds to the sequence of the power supply of Fig. 12.

When using antenna-style inductors (for inductor 1 and 2), then the principle of the propulsion system described in Fig. 13 remains the same as described with reference to Fig. 12. The explanations given before are also applicable to this inductor arrangement with the exception that there is no need to make the inductor 1 (antenna 1) in phase 3 of Fig. 13 disappear. It is sufficient that the inductor 1 is open loop and not connected to any circuitry or to any power.

Fig. 14 shows a propulsion unit 1 having six air coils L1, L2, L3, L4, L5, and L6. The air coils are arranged along a common longitudinal axis 110. The distance 108 between adjacent or neighboring coils is same. The distance 108 may be between 1.1 to 1.5 time the diameter of the air coils.

Fig. 15 shows an air coil including command interfaces for controlling and supplying energy to the coil 100.

Each inductor 100 may be operated in one of three possible operating conditions: electric current flowing in forward direction through it, electric current flowing in reverse direction through it, and the inductor is deactivated (contact breakers 22 are open, see Fig. 7 through 9, in other words, inductor's properties have changed and consequently no current will flow).

The above functional block diagram shown in Fig. 15 is one of several options available. Of course, the propulsion unit will also function if run with only two operating conditions: current will flow in one direction only, and the inductor has been deactivated. However, running the inductor in three operating conditions may increase the efficiency of the propulsion unit.

There are two control inputs 125, 127 that will define the function and operation of the air-coil 100: the first interface 125 activates and deactivates the inductor by opening or closing the contact breaker 22), and the third interface 127 determines the direction of flow of the supplied electrical current by closing or opening the assigned switches S1, S2, S3, S4 accordingly (forwards or backwards).

Power is supplied to the coil 100 via the second interface 126, and the coil 100 is connected to ground via the fourth interface 128. The current flows in a first direction through the coil 100 from the second interface 126 to the fourth interface 128 if the switches S1 and S4 are closed while the switches S2 and S3 are open. The current flows in the opposite direction through the coil 100 if S3 and S2 are closed while S1 and S4 are open.

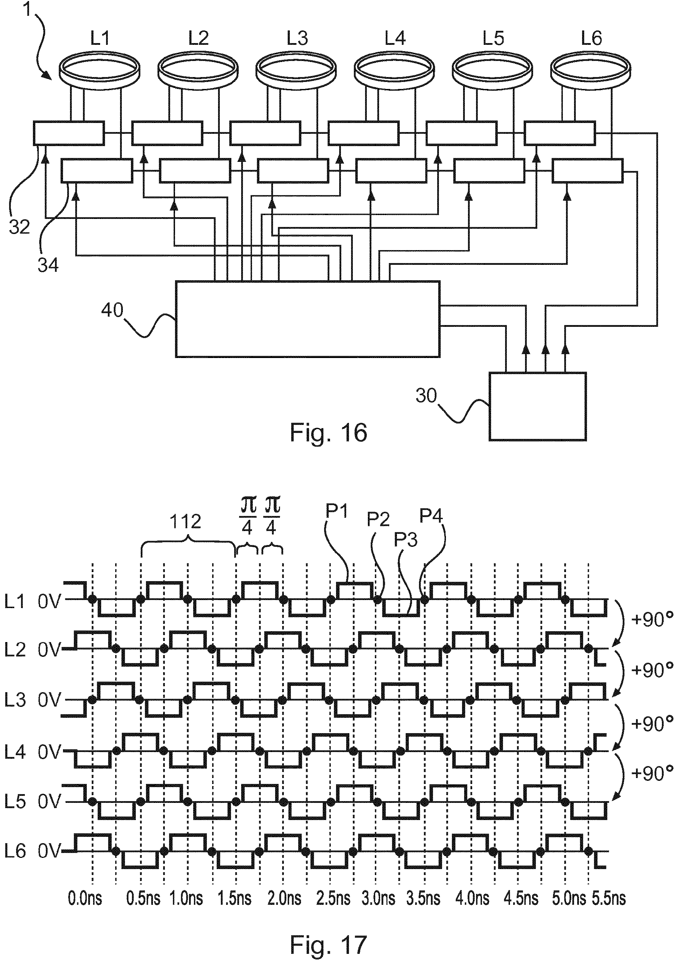

Fig. 16 shows a magnetic field propulsion unit with six coils L1 to L6 (similar to Fig. 14) and the corresponding control as well as power supply. An energy supply unit 30 provides power to the controller 40 and to the power drivers 32 (each coil is assigned an individual power driver that provides electrical energy to that specific coil) and to the deactivation unit 34 (the deactivation unit controls the contact breakers 22 of each coil L1 to L6 and determines if the contact breakers are open or closed; each coil is assigned one deactivation unit). However, multiple power drivers 32 or multiple deactivation units 34 may be arranged within a single component while the function described herein is fulfilled by that component.

It is noted that every coil 100 shown in any embodiment herein comprises contact breakers 22 as described with reference to Fig. 7 through 9 or a similar entity for changing the electromagnetic properties of the inductor 100. For example, even if these contact breakers are not shown in Fig. 16, the coils comprise these contact breakers which are controlled by the deactivation unit 34.

The control unit 40 provides control signals to the power driver 32 and deactivation unit 34. Thus, the switching scheme generally described with reference to Fig. 12 is implemented. However, the switching scheme for the power unit with six coils is described in more detail below.

The six air coils L1 to L6 are connected to six enabling circuits (each of them will activate or deactivate the function of a specific inductor) and a power driver 32. The power driver circuit for each inductor has to be able to provide a relatively large supply current in bidirectional direction in a very short time. The deactivation unit 34 or deactivation driver modules and the power diver modules 32 are then controlled by a control unit 40. All driver circuits are connected to the energy supply unit 30.

Fig. 17 shows the switching scheme for the coils L1 to L6 of the magnetic field propulsion unit described with reference to Fig. 16.

The switching scheme is the electric powering sequence (control voltage signals for the six power drivers 32 over a 5 ns time) for six air-coils that have been placed in-line side-by-side. The sequence in Fig. 17 represents the activities over a 5-nanosecond time. During this 5 ns, the air-coil array has generated 20 thrust pulses (marked with dashed vertical lines) in one direction (in-line to the air-coil array). This represents one thrust pulse every 250 ps (pico second). This is equivalent to an oscillation frequency of the propulsion unit of 4 GHz (for an air-coil diameter of around 100 mm in a "flat", side-by-side arrangement).

The vertical dashed lines represent when a thrust pulse occurs. In this configuration, three out of the six coils create the thrust pulse at a given time.

The dots on the 0 Volt line for each control signal indicate when the inductor has been completely deactivated (contact breakers 22 are open, the coil is no longer present as an inductor, a rod-like antenna is not supplied with energy).

Each inductor is powered in forward direction (positive current) and after a short deactivation break is powered in the reverse direction (negative current flowing through the air-coil).

The coils L1 to L6 are driven by an identical supply voltage that is phase shifted with respect to a predecessor coil. The phase is shifted by 90° of quarter of Pi. One cycle 112 contains four different periods of time P1, P2, P3, P4 with a change of state between these periods of time.

The coils L1 to L6 may be replaced with rod-like antennas while the basic function of the device is the same as described with reference to the embodiments with coils. In such examples, the rod antennas are parallel to each other and are arranged along a linear axis. The rod antennas are driven by power drivers that are individually assigned to each of the antennas. A control unit implements the switching scheme for the power supplied to the rod antennas. A deactivator unit is not needed in this example.

Back now to the switching scheme. At the time 0.875 ns which is between the fourth and fifth vertical lines, an electric current is flowing through all of the six air coils L1 to L6. L1, L2 and L5, L6 are flown through by a positive current, and the inductors L3 and L4 are flown through by negative current. Thus, L1, L2, L5, and L6 on the one hand, and L3 and L4 on the other hand act on each other (repel and attract) in specific directions to generate a propulsion force in the same.

At the time 1 ns, three of the inductors (namely L1, L3, L5) have been deactivated (the respective contact breakers 22 are open, the coils have changed their properties and are no longer present as a functioning inductor, the antennas are no longer supplied with electric current). Only the inductors L2, L4, and L6 remain and an electric current is flowing through each of these inductors. Depending in which direction the electric current flows through the inductor, either the north pole or the south pole will face up. The magnetic field structures (clouds) from the formerly present inductors L1, L3, and L5 are no longer anchored to anything and expand in space. However, these three magnetic clouds will be repelled or attracted by the functioning and electric powered inductors L2, L4, and L6. This will make the not anchored magnetic clouds "move" into the same direction and with this creating a small propulsion force in the opposite direction.

At t = 1,125 ns (between the fifth and sixth vertical line), all six inductors L1 to L6 are activated (supplied with current flowing in the indicated directions). However, for the inductors L1, L3, L5, the direction of current has reversed compared to t = 0,875 ns.

At 1,250 ns, which is at the sixth vertical line, only the three inductors L1, L3, L5 are functioning and an electric current is flowing through them. The other three inductors L2, L4, L6 have been deactivated and are no longer acting as an inductor. Just before the three no-longer-anchored magnetic structures (created by the inductors L2, L4, and L6) have dispersed, they will be attracted or repelled by the three remaining and functioning inductors L1, L3, L5 into one and the same direction. A small propulsion force created by each of them is generated in the opposite direction.

Considering the magnetic activities of four successive time events (0.875 ns, 1.000 ns, 1.125 ns, and 1.250 ns), the creation of small pulsed propulsion forces into the same direction can be observed.

The magnetic field propulsion unit may comprise an array of coils 100 building up a matrix structure. The coils are arranged in columns and rows. In these columns and rows, the coils are arranged such that the center of the coils are arranged along a common linear (vertical and horizontal) axis. Each row is made up of six coils. However, each row may have more or less than six coils. The number of columns is not limited as such. The magnetic field propulsion unit may comprise one or multiple columns. Each column corresponds to the arrangement shown in Fig. 15 and implementing the switching scheme described above.

The array of coils allows to create a force in any direction in the X-Y-plane defined by the direction of the columns and rows without having to rotate the two-dimensional magnetic field propulsion unit. Such a matrix-structure allows the creation of propulsion forces in any direction of this plane without having to turn the array in a preferred direction. Other air-coil arrangements and the appropriate control algorithm will allow the two-dimensional array to even rotate in any of the horizontal directions.

Based on the principles described with reference to the examples shown in Figs. 1 to 17, embodiments of the invention are described in the following.

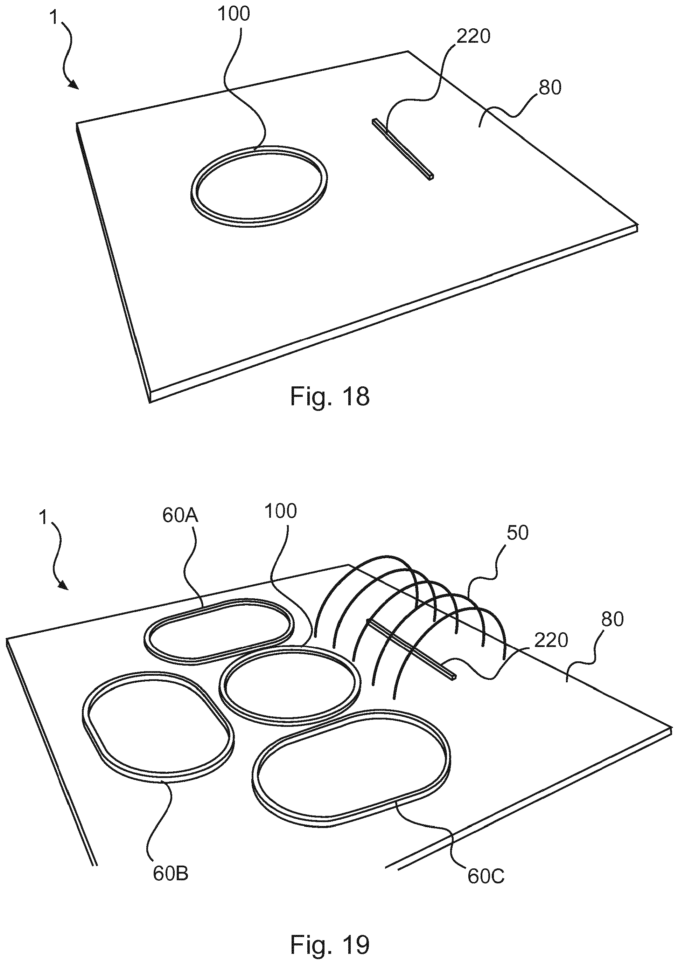

Fig. 18 shows a magnetic field propulsion unit 1 with a printed circuit board 80, a first magnetic field generating device 100 and a second magnetic field generating device 220. Generally, the first and second magnetic field generating devices 100, 220 may be attached to any base element that is suitable to receive the propulsion forces generates by the magnetic field generating devices and mechanically hold or support the magnetic field generating devices. The magnetic field generating devices may be supplied with electrical energy by wires as described above.

Although Fig. 18 does not show the control unit and the energy supply unit, these elements are part of the propulsion unit. For example, the control unit and the energy supply unit may be attached to the underside of the PCB 80 opposite to the magnetic field generating devices.

When supplied with electrical energy as described above with respect to the switching scheme, a propulsion force to the left of Fig. 18 is generated. While in Figs. 1 through 17 examples are shown which consist of coils or antennas only, Fig. 18 relates to a mix of these components.

In other words, Fig. 18 shows a hybrid type of MCA drive where a coil-design magnetic field generator is working together with an antenna style magnetic field emitter. This design option two particular characteristics: the entire MCA drive is flat and can be placed directly onto a flat PCB or a semiconductor substrate and the chosen antenna design (open-ended straight wire) will cause very little eddy currents.

The primary purpose of the MCA Drive is to provide propulsion. The propulsion forces will increase with the increase of the magnetic field intensity and density generated and directed into the desired direction, i.e., from the first magnetic field generating device towards the second magnetic field generating device.

The electric current that is powering the MCA drive will increase exponentially when increasing the signal amplitude. Without any counter-measures, the magnetic fields generated by a basic-design of an MCA drive module will radiate in all directions 360 degree around the carrier platform bound field generator 100 (also called the "stationary" field generator).

The magnetic field that is not interacting with the emitter 220 (the "antenna" that is placed at one side of the field generator) will be wasted and eventually will interact with other conductive and ferro-magnetic objects nearby. As these fields may be very strong, these fields may be undesired.

Generally, it is found that there are several possibilities to reduce or even prevent such an unwanted interaction of the waste field with its surroundings: active cancellation (which may create another form of wasted energy), passive shielding (the energy is then wasted as it converts into heat, for example), harvesting (recovering some or most of the misdirected field), and channeling (where possible, directing the field in the desired direction towards the antenna 220).

Fig. 19 shows a magnetic field propulsion unit 1 that is similar to that one shown in Fig. 18. However, in addition to the elements shown in Fig. 18, the example of Fig. 19 schematically shows the magnetic field lines 50 of the magnetic field emitted by the antenna 220.

Furthermore, the magnetic field propulsion unit 1 comprises an energy harvesting unit with three coils 60A, 60B, 60C. These three coils are arranged so that they surround the magnetic field generating device 100 in a C-shaped manner with small gaps between the coils 60A, 60B, 60C. Thus, the energy of the magnetic field that is generated by the first magnetic field generating device 100 and that is not directed towards the second magnetic field generating device 220 can be harvested by the harvesting coils 60A, 60B, 60C. Said part of the magnetic field induces an electric current into the harvesting coils and the electric current can be supplied to the energy supply unit.

For example, the energy supply unit may be or may contain a rechargeable current source like a battery, a capacity. In addition, the energy supply unit may contain a current source which does not depend on the charging status of said rechargeable current source, for example a current source that is supplied with energy by a power plant.

The harvesting coils may be circular or elliptic. Elliptic coils may be preferred since they may provide for smaller gaps between neighboring coils.

The PCB 80 may be replaced by any base plate that can mechanically support and hold the elements and provide the elements with electrical energy by additional wires or conductive tracks as required by the examples and the appended claims. The base plate may be a semiconductor wafer.

In the example of Fig. 19, the coil 100 and the antenna 220 are mounted horizontally. The coil 100 will generate a stationary magnetic field that is bound or anchored to the position of the coil 100. Three harvesting coils 60A, 60B, 60C are placed around the coil 100 and are used for energy recovery. Five magnetic field lines of the magnetic field 50 around the antenna-emitter are shown.

With reference to this example, the basic function principle of the magnetic field propulsion unit shall be repeated:
In a first step, a first a magnetic field is generated (one single wave of a specific high frequency) around the inductor or antenna like emitter 220. Then, in a second step and just before this single magnetic wave reaches its peak, a magnetic field of the same wavelength is generated by the coil 100 that is bound to the PCB 80. As the single energy wave of the second magnetic field generating device 220 is coming to its end (antenna 220 will be switched off), the magnetic field generated by the coil 100 reaches its peak, and with this is pushing away the magnetic field that surrounds the antenna 220. The magnetic field is pushed away to the right (in the same plane as the PCB carrier platform), away from the carrier platform. After the magnetic field that had been generated by the coil 100 is switched off, the whole procedure repeats again.

The objective of the stationary (or carrier platform bound) magnetic field pulse of the coil 100 is to push-away or accelerate the movable (or not unit-bound) magnetic field pulse of the antenna 220 into one specific direction, i.e., away from the coil 100. However, it is basically possible that the coil 100 is provided with electrical energy so that the magnetic field of the antenna 220 is attracted towards the coil 100 and thereby generating the propulsion force which is opposite to the force when pushing the magnetic field of the antenna 220 away from the coil 100.

A part of the energy of the magnetic field pulse of the coil 100 does not contribute to the main objective and is wasted. This applies to the magnetic field that is not directed towards the antenna 220. To recover at least some of the wasted energy, energy harvesting coils 60A, 60B, 60C (inductors) are placed around three sides of the magnetic field generating device 100. There are several possible coil designs to recuperate the magnetically transmitted energy. Only some of the possible coil designs are mentioned here. In Fig. 19, the energy harvesting coils have a slightly oval shape. The energy harvesting inductors are placed closely together and surround from three sides the first magnetic field generating device 100.

The side that is facing the antenna 220 is not blocked by the energy harvesting inductors. Because of the chosen high frequency (several GHz, for example 1.5 GHz or higher) all four coils 60A, 60B, 60C, 100 may have a very few windings (wire turns) only. Potentially, each coil consists of one wire turn only.

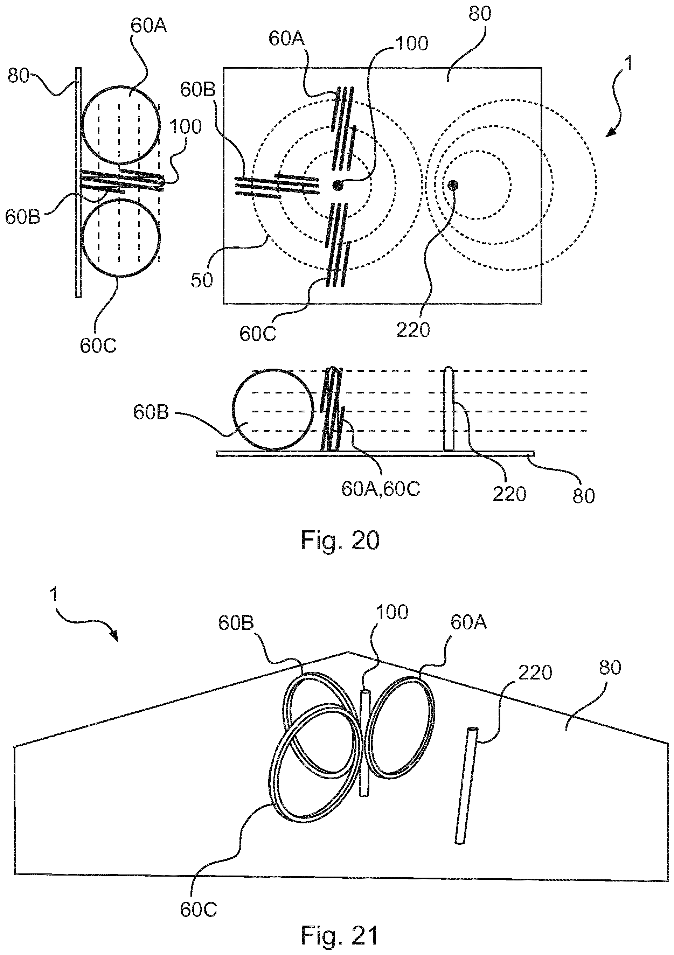

Fig. 20 shows an alternative design of a magnetic field propulsion unit 1. Generally, with regard to its function, it is similar to the design shown in Figs. 18 and 19. However, instead of placing all the elements flat onto the PCB carrier platform, they can be placed upright. Furthermore, the first magnetic field generating device 100 is also a rod-like antenna like the second magnetic field generating device 220.

It can be seen in Fig. 20 that the harvesting coils 60A, 60B, 60C are located within the magnetic field 50 of the first magnetic field generating device 100, so that an electric current is induced in the harvesting coils.

The antennas 100, 220 are orthogonal with respect to the mounting surface of the PCB 80 and so are the harvesting coils, as can be seen from the left side view (upper drawing on the left), the top down view (upper drawing on the right), and the front view (lower drawing)

Fig. 21 shows an isometric view of the propulsion unit 1 shown in Fig. 20. The elements may be attached or mounted by any suitable means to the PCB, like plug-connections, screws, rivets, bolts, adhesives, etc. The coils 60A, 60B, 60C and antennas 100, 220 may be provided with electrical energy by wires that are guided through from the lower side of the PCB.

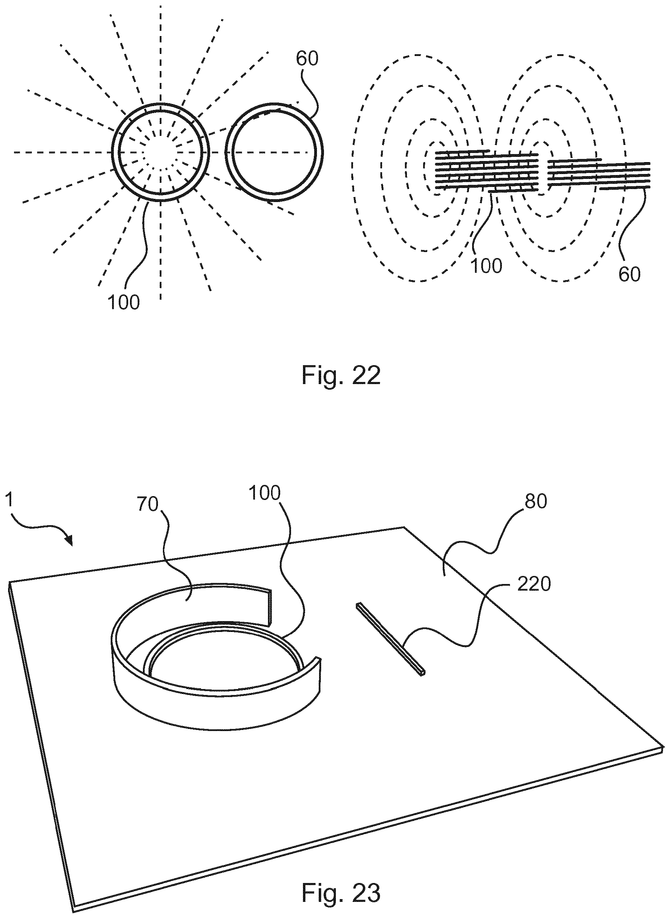

Fig. 22 shows the placement of a harvesting coil 60 with respect to a magnetic field generating device 100. For example, the coils 60, 100 lie in the same plane, as shown in Fig. 19 (the harvesting coils and the generating coil are arranged on the surface of the PCB). Particularly, the energy harvesting coil 60 is placed from the side (in the same plane) with respect to the field generator coil 100 as the field generator coil 100 allows to absorb/harvest the alternating magnetic energy at this location only without noticeably effect the field lines in other areas around the generator coil, particularly without reducing the strength of the magnetic field that is emitted towards the second magnetic field generating device.

In other words, the central axes of the coils 100, 60 are parallel to each other. In Fig. 22 on the left, the central axes are 90 degrees with respect to the drawing plane and the drawing plane corresponds to the plane of the coils 100, 60. As can be seen in Fig. 22 on the right, the coils are arranged at the same level/height which is automatically the case when these coils are arranged at the same surface of a base plate (PCB).

Fig. 23 schematically shows how the magnetic field of the first magnetic field generating device 100 is shielded by a shielding unit 70.

The shielding unit 70 is substantially C-shaped with an opening that does not obstruct a line of sight from the first magnetic field generating device 100 to the second first magnetic field generating device 220. The shielding unit 70 is a wall-like structure that is arranged on the same surface of the PCB like the first and second first magnetic field generating devices 100, 220. The shielding unit may be higher than the first magnetic field generating device 100 (i.e., extends away from the surface of the PCB to a predetermined height that is higher than the height of the first magnetic field generating device 100). The shielding unit comprises electrically conductive material.

This provides a possibility to prevent the non-productive alternating magnetic energy to leave the MCA drive unit by absorbing it by the shielding device. The first and second magnetic field generating devices are powered with a very high frequency (in the GHz range) current. Thus, the best shielding option is to design a device that creates eddy currents. It may be desired that the shielding unit has an electrically very highly conductive surface.

Cooling of the shielding unit may be needed as high levels of energy are converted into heat. To prevent that the Eddy Currents can create larger cancellation field structures (that will reduce the MCA propulsion performance) the electric surface in the shielding may be interrupted frequently.

The energy supply unit and the control unit may be arranged at the underside of the PCB. However, preferably the energy supply unit and the control unit are placed directly opposite to the active components they supply with energy or control, respectively, so that the wires are as short as possible. Furthermore, the energy supply unit and the control unit are placed out of the path of the propulsion responsible magnetic field.

The design principles described above may provide for reduction of energy consumption (especially the use of the harvesting coils) and substantially reduce undesired effects of the magnetic field (especially by use of the shielding unit).

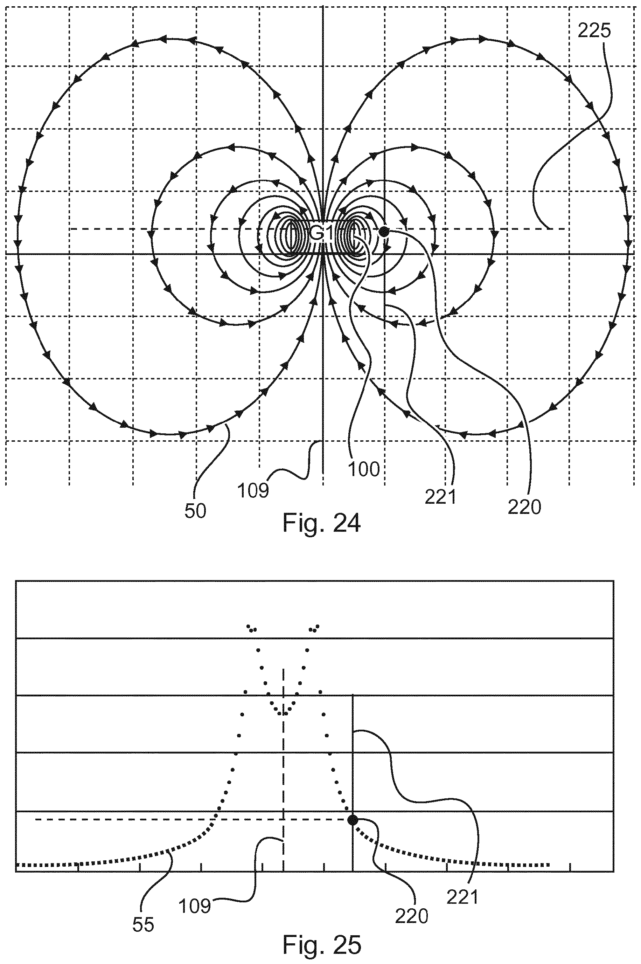

Fig. 24 shows a first magnetic field generating device 100 (G1) and a second magnetic field generating device 220 that is laterally spaced apart of the first magnetic field generating device. The straight vertical line 109 indicates the center point of the first magnetic field generating device 100 and the straight vertical line 221 indicates the center point of the second magnetic field generating device 220. The distance between the lines 109 and 221 defines the intensity of the magnetic field 50 at the position of the second magnetic field generating device 220 when changing the distance along the linear axis 225.

Fig. 24 shows a top-down view with the antenna 220 being shown as a circle.

Fig. 25 shows the intensity 55 of the magnetic field 50 of Fig. 24 depending on the distance between the antenna 220 and the coil 100. The center of the coil 100 is positioned at the line 109. At the position of the antenna 220, the magnetic field 50 has a certain intensity 55.

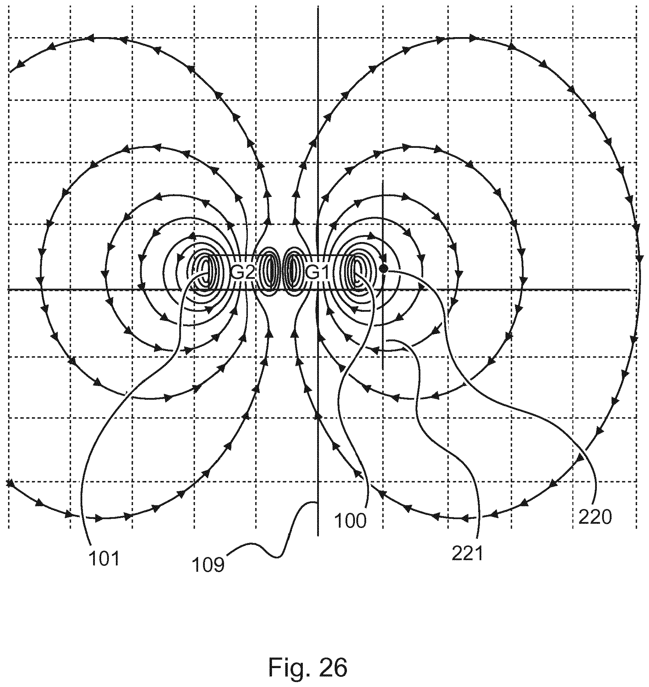

Further to Fig. 24, Fig. 26 shows an example in which the first magnetic field generating device comprises a first coil 100 and a second coil 101. The second coil 101 pushes the magnetic field of the first coil 100 towards the antenna 220. Thus, the intensity of the magnetic field at position 221 is increased without changing the distance between 221 and 109.

In the example of Fig. 26, the magnetic field strength is not symmetric as shown in Figs. 24 and 25, but the intensity is higher when moving to the right (starting from 109) and decreases rapidly when moving to the left (starting from 109).

The coils 100 and 101 may be spaced apart from each other or may placed side-by-side without any gap in between. This may additionally increase the intensity of the magnetic field that is emitted towards the antenna 220.

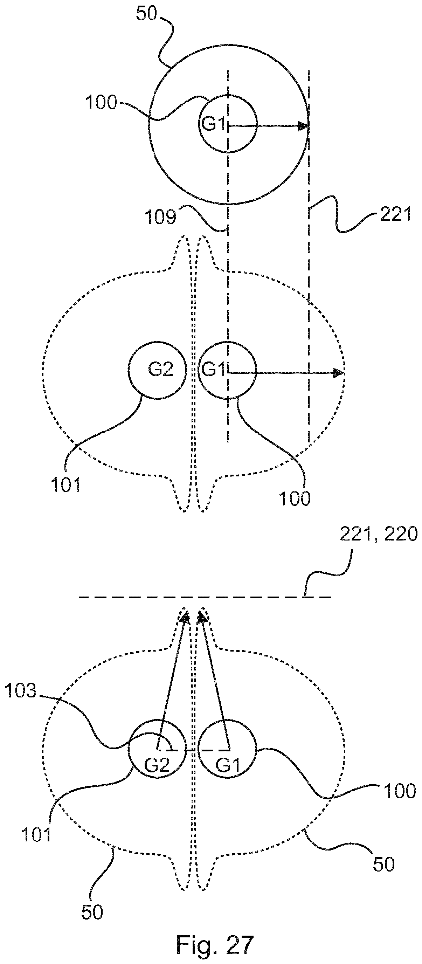

Fig. 27 shows three different design options of the magnetic field propulsion unit. For the sake of brevity, only the first magnetic field generating device with first coil 100 and second coil 101 is shown and additionally indicating the position 221 of the antenna 220.

In a first option, there is one generating coil 100 (G1) emitting a magnetic field 50 that has a certain intensity at the position 221 of the antenna 220.

In a second option, a second coil 101 is positioned such that it pushes the magnetic field 50 of the coil 100 towards the antenna 220. This increases the intensity of the magnetic field 50 at the position of the antenna 220.

In a third option, the antenna 220 is arranged at another position as shown in the upper two drawings of Fig. 27. In the third option, the antenna is parallel to an interconnecting line 103.

The antenna extends in the direction of the horizontal dashed line. As can be seen in the simulation of the magnetic fields 50 of coils 100, 101, the intensity of these fields is highest at the positions where the fields face each other. Thus, when placing the antenna 220 at this position with the indicated orientation, the maximum propulsion force may be generated.

Although the Figs. 18 to 27 refer to the combination of one first and one second magnetic field generating device 100, 220, it should be understood that this structure represents a single MCA propulsion unit. Multiple of such propulsion units may be combined to achieve a propulsion unit that provides increased propulsion forces.

It should be understood that the features described in individual exemplary embodiments may also be combined with each other. While certain representative embodiments and details have been shown for the purpose of illustrating the subject invention, it will be apparent to those skilled in this art that various changes and modifications can be made.

### List of reference signs

- 1: magnetic field propulsion unit
- 20: contact breaker arrangement
- 22: contact breaker
- 30: energy supply unit
- 32: power driver
- 34: deactivation unit
- 40: control unit
- 50: field lines of the magnetic field
- 55: field strength
- 60: harvesting unit
- 70: shielding unit
- 80: printed circuit board
- 100: conductive line, coil, first coil, magnetic field generating device
- 101: second coil
- 102: inner chamber
- 103: interconnecting line
- 104: semi-conductive fluid
- 106: energy supply lines
- 108: distance between adjacent or neighboring coils
- 109: center point
- 110: longitudinal axis
- 112: cycle
- 114: plane
- 116: first section
- 118: second section
- 122: magnetic field intensity
- 124: center of the rod antenna
- 125: first interface
- 126: second interface
- 127: third interface
- 128: fourth interface
- 140: matrix structure
- 141: columns
- 142: rows
- 220: second magnetic field generating device, antenna
- 221: center point
- 225: linear axis

## Claims

1. Magnetic field propulsion unit (1), comprising:
a first magnetic field generating device (100, 220) configured to generate a magnetic field;
a second magnetic field generating device (100, 220) configured to generate a magnetic field;
an energy supply unit (30) configured to provide the first magnetic field generating device (100, 220) and the second magnetic field generating device (100, 220) with electrical energy;
a control unit (40) configured to control the energy supply unit in accordance with a predefined switching scheme;
wherein the second magnetic field generating device (100, 220) is a rod-like antenna or a coil that lies in a plane in which also the first magnetic field generating device (100, 220) lies;
wherein the control unit (40) is configured to:
supply the first magnetic field generating device (100, 220) with electrical energy so that a first magnetic field surrounding the first magnetic field generating device is generated;
supply the second magnetic field generating device (100, 220) with electrical energy so that a second magnetic field surrounding the second magnetic field generating device (100, 220) is generated, wherein a switch-on operation to supply the second magnetic field generating device (100, 220) with electrical energy takes place a predetermined period of time after a switch-on operation to supply the first magnetic field generating device (100, 220) with electrical energy and while the first magnetic field generating device (100, 220) is still supplied with electrical energy;
interrupt the energy supply to the first magnetic field generating device (100, 220) after the switch-on operation to supply the second magnetic field generating device (100, 220) with electrical energy and while the second magnetic field generating device (100, 220) is still supplied with electrical energy, so that the second magnetic field repels the first magnetic field generating device and thus generates a repelling force to move the magnetic field propulsion unit;
**characterized in that** the magnetic field propulsion unit (1) further comprises:
an energy harvesting unit (60A, 60B, 60C) that at least partially surrounds the first magnetic field generating device (100);
wherein the energy harvesting unit comprises at least one coil that is configured to generate electric current by induction when the first magnetic field is generated;
wherein the energy harvesting unit is C-shaped and a line of sight from the first magnetic field generating device (100, 220) to the second magnetic field generating device (100, 220) is free of the energy harvesting unit.

2. Magnetic field propulsion unit (1) of claim 1,
wherein the electric current generated by the energy harvesting unit is provided to the energy supply unit (30).

3. Magnetic field propulsion unit (1) of any one of the preceding claims,
wherein the first magnetic field generating device (100, 220) comprises a first coil that is configured to generate a magnetic field when being supplied with electrical energy.

4. Magnetic field propulsion unit (1) of claim 3,
wherein the first magnetic field generating device (100, 220) comprises a second coil that is configured to generate a magnetic field when being supplied with electrical energy;
wherein the second coil is oriented parallel to the first coil.

5. Magnetic field propulsion unit (1) of claim 4,
wherein the first coil is arranged between the second coil and the second magnetic field generating device (100, 220);
wherein the second magnetic field generating device is perpendicular to an interconnecting line (103) between the first coil and the second coil.

6. Magnetic field propulsion unit (1) of claim 4,
wherein the second magnetic field generating device is parallel to an interconnecting line (103) between the first coil and the second coil.

7. Magnetic field propulsion unit (1) of claim 6,
wherein the second magnetic field generating device is centered along its longitudinal direction between the first and second coil.

8. Magnetic field propulsion unit (1) of any one of the preceding claims,
further comprising a shielding unit (70) that is C-shaped and partially surrounds the first magnetic field generating device (100, 220);
wherein the energy harvesting unit (60A, 60B, 60C) is arranged at least partially in the space enclosed by the shielding unit (70);
wherein the shielding unit comprises electrically conductive material.

9. Magnetic field propulsion unit (1) of any one of the preceding claims,
wherein the first magnetic field generating device is a rod-like antenna.

10. Magnetic field propulsion unit (1) of any one of the preceding claims,
further comprising a printed circuit board, PCB;
wherein the first magnetic field generating device and the second magnetic field generating device are arranged on a surface of the PCB.

11. Magnetic field propulsion unit (1) of claim 10,
wherein the first magnetic field generating device and/or the second magnetic field generating device are made up by conductive tracks of the PCB.

12. Magnetic field propulsion unit (1) of claim 10,
wherein the second magnetic field generating device is perpendicular to a surface of the PCB.

## Patentansprüche

1. Magnetfeldantriebseinheit (1), aufweisend:
eine erste Magnetfelderzeugungsvorrichtung (100, 220), die zur Erzeugung eines Magnetfelds konfiguriert ist;
eine zweite Magnetfelderzeugungsvorrichtung (100, 220), die zur Erzeugung eines Magnetfelds konfiguriert ist;
eine Energieversorgungseinheit (30), die so konfiguriert ist, dass sie die erste Magnetfelderzeugungsvorrichtung (100, 220) und die zweite Magnetfelderzeugungsvorrichtung (100, 220) mit elektrischer Energie versorgt;
eine Steuereinheit (40), die so konfiguriert ist, dass sie die Energieversorgungseinheit in Übereinstimmung mit einem vordefinierten Schaltschema steuert;
wobei die zweite Magnetfelderzeugungsvorrichtung (100, 220) eine stabförmige Antenne oder eine Spule ist, die in einer Ebene liegt, in der auch die erste Magnetfelderzeugungsvorrichtung (100, 220) liegt;
wobei die Steuereinheit (40) so konfiguriert ist, dass sie:
die erste Magnetfelderzeugungsvorrichtung (100, 220) mit elektrischer Energie versorgt, so dass ein erstes Magnetfeld erzeugt wird, das die erste Magnetfelderzeugungsvorrichtung umgibt;
die zweite Magnetfelderzeugungsvorrichtung (100, 220) mit elektrischer Energie versorgt, so dass ein zweites Magnetfeld, das die zweite Magnetfelderzeugungsvorrichtung (100, 220) umgibt, erzeugt wird, wobei ein Einschaltvorgang zur Versorgung der zweiten Magnetfelderzeugungsvorrichtung (100, 220) mit elektrischer Energie eine vorbestimmte Zeitspanne nach einem Einschaltvorgang zur Versorgung der ersten Magnetfelderzeugungsvorrichtung (100, 220) mit elektrischer Energie stattfindet und während die erste Magnetfelderzeugungsvorrichtung (100, 220) noch mit elektrischer Energie versorgt wird;
Unterbrechen der Energieversorgung der ersten Magnetfelderzeugungsvorrichtung (100, 220) nach dem Einschaltvorgang, um die zweite Magnetfelderzeugungsvorrichtung (100, 220) mit elektrischer Energie zu versorgen, und während die zweite Magnetfelderzeugungsvorrichtung (100, 220) noch mit elektrischer Energie versorgt wird, so dass das zweite Magnetfeld die erste Magnetfelderzeugungsvorrichtung abstößt und somit eine Abstoßungskraft erzeugt, um die Magnetfeldantriebseinheit zu bewegen;
**dadurch gekennzeichnet, dass** die Magnetfeldantriebseinheit (1) weiterhin umfasst:
eine Energiegewinnungseinheit (60A, 60B, 60C), die die erste Magnetfelderzeugungsvorrichtung (100) zumindest teilweise umgibt;
wobei die Energiegewinnungseinheit mindestens eine Spule umfasst, die so konfiguriert ist, dass sie elektrischen Strom durch Induktion erzeugt, wenn das erste Magnetfeld erzeugt wird;
wobei die Energiegewinnungseinheit C-förmig ist und eine Sichtlinie von der ersten Magnetfelderzeugungsvorrichtung (100, 220) zu der zweiten Magnetfelderzeugungsvorrichtung (100, 220) frei von der Energiegewinnungseinheit ist.

2. Magnetfeldantriebseinheit (1) nach Anspruch 1,
wobei der von der Energiegewinnungseinheit erzeugte elektrische Strom der Energieversorgungseinheit (30) zugeführt wird.

3. Magnetfeldantriebseinheit (1) nach einem der vorhergehenden Ansprüche,
wobei die erste Magnetfelderzeugungsvorrichtung (100, 220) eine erste Spule umfasst, die so konfiguriert ist, dass sie ein Magnetfeld erzeugt, wenn sie mit elektrischer Energie versorgt wird.

4. Magnetfeldantriebseinheit (1) nach Anspruch 3,
wobei die erste Magnetfelderzeugungsvorrichtung (100, 220) eine zweite Spule umfasst, die so konfiguriert ist, dass sie ein Magnetfeld erzeugt, wenn sie mit elektrischer Energie versorgt wird;
wobei die zweite Spule parallel zur ersten Spule ausgerichtet ist.

5. Magnetfeldantriebseinheit (1) nach Anspruch 4,
wobei die erste Spule zwischen der zweiten Spule und der zweiten Magnetfelderzeugungsvorrichtung (100, 220) angeordnet ist;
wobei die zweite Magnetfelderzeugungsvorrichtung senkrecht zu einer Verbindungslinie (103) zwischen der ersten Spule und der zweiten Spule steht.

6. Magnetfeldantriebseinheit (1) nach Anspruch 4,
wobei die zweite Magnetfelderzeugungsvorrichtung parallel zu einer Verbindungslinie (103) zwischen der ersten Spule und der zweiten Spule liegt.

7. Magnetfeldantriebseinheit (1) nach Anspruch 6,
wobei die zweite Magnetfelderzeugungsvorrichtung entlang ihrer Längsrichtung zwischen der ersten Spule und der zweiten Spule zentriert ist.

8. Magnetfeldantriebseinheit (1) nach einem der vorhergehenden Ansprüche,
ferner aufweisend eine Abschirmeinheit (70), die C-förmig ist und die erste Magnetfelderzeugungsvorrichtung (100, 220) teilweise umgibt;
wobei die Energiegewinnungseinheit (60A, 60B, 60C) zumindest teilweise in dem von der Abschirmeinheit (70) umschlossenen Raum angeordnet ist;
wobei die Abschirmeinheit elektrisch leitfähiges Material aufweist.

9. Magnetfeldantriebseinheit (1) nach einem der vorhergehenden Ansprüche,
wobei die erste Magnetfelderzeugungsvorrichtung eine stabförmige Antenne ist.

10. Magnetfeldantriebseinheit (1) nach einem der vorhergehenden Ansprüche,
ferner aufweisend eine Leiterplatte, PCB;
wobei die erste Magnetfelderzeugungsvorrichtung und die zweite Magnetfelderzeugungsvorrichtung auf einer Oberfläche der Leiterplatte angeordnet sind.

11. Magnetfeldantriebseinheit (1) nach Anspruch 10,
wobei die erste Magnetfelderzeugungsvorrichtung und/oder die zweite Magnetfelderzeugungsvorrichtung durch Leiterbahnen der Leiterplatte gebildet werden.

12. Magnetfeldantriebseinheit (1) nach Anspruch 10,
wobei die zweite Magnetfelderzeugungsvorrichtung senkrecht zu einer Oberfläche der Leiterplatte steht.

## Revendications

1. Unité de propulsion à champ magnétique (1), comprenant :
un premier dispositif de génération de champ magnétique (100, 220) configuré pour générer un champ magnétique ;
un second dispositif de génération de champ magnétique (100, 220) configuré pour générer un champ magnétique ;
une unité de fourniture de énergie (30) configurée pour fournir de l'énergie électrique au premier dispositif de génération de champ magnétique (100, 220) et au second dispositif de génération de champ magnétique (100, 220) ;
une unité de commande (40) configurée pour commander l'unité de fourniture d'énergie conformément à un schéma de commutation prédéfini ;
le second dispositif de génération de champ magnétique (100, 220) est une antenne en forme de tige ou une bobine qui se trouve dans un plan dans lequel se trouve également le premier dispositif de génération de champ magnétique (100, 220) ;
dans lequel l'unité de commande (40) est configurée pour :
fournir le premier dispositif de génération de champ magnétique (100, 220) en énergie électrique de manière à générer un premier champ magnétique autour du premier dispositif de génération de champ magnétique ;
fournir le second dispositif de génération de champ magnétique (100, 220) en énergie électrique de manière à générer un second champ magnétique autour du second dispositif de génération de champ magnétique (100, 220), dans lequel une opération de mise en marche pour fournir le second dispositif de génération de champ magnétique (100, 220) en énergie électrique a lieu pendant une période prédéterminée après une opération de mise en marche pour fournir le premier dispositif de génération de champ magnétique (100, 220) en énergie électrique et alors que le premier dispositif de génération de champ magnétique (100, 220) est encore fournir en énergie électrique ;
interrompre le fourniture en énergie du premier dispositif de génération de champ magnétique (100, 220) après l'opération de mise en marche pour fournir le second dispositif de génération de champ magnétique (100, 220) en énergie électrique et pendant que le second dispositif de génération de champ magnétique (100, 220) est encore fournir en énergie électrique , de sorte que le second champ magnétique repousse le premier dispositif de génération de champ magnétique et génère ainsi une force de répulsion pour déplacer l'unité de propulsion à champ magnétique ;
**caractérisé par le fait que** l'unité de propulsion à champ magnétique (1) comprend en outre :
une unité de collecte d'énergie (60A, 60B, 60C) qui entoure au moins partiellement le premier dispositif de génération de champ magnétique (100) ;
l'unité de collecte d'énergie comprend au moins une bobine configurée pour générer un courant électrique par induction lorsque le premier champ magnétique est généré ;
l'unité de collecte d'énergie est en forme de C et une ligne de visée entre le premier dispositif de génération de champ magnétique (100, 220) et le second dispositif de génération de champ magnétique (100, 220) est libre de l'unité de collecte d'énergie.

2. Unité de propulsion à champ magnétique (1) de la revendication 1,
dans lequel le courant électrique généré par l'unité de collecte d'énergie est fourni à l'unité de fourniture de énergie (30).

3. Unité de propulsion à champ magnétique (1) de l'une quelconque des revendications précédentes,
dans lequel le premier dispositif de génération de champ magnétique (100, 220) comprend une première bobine configurée pour générer un champ magnétique lorsqu'elle est fournir en énergie électrique.

4. Unité de propulsion à champ magnétique (1) de la revendication 3,
dans lequel le premier dispositif de génération de champ magnétique (100, 220) comprend une seconde bobine configurée pour générer un champ magnétique lorsqu'elle est fournir en énergie électrique ;
la seconde bobine est orientée parallèlement à la première bobine.

5. Unité de propulsion à champ magnétique (1) de la revendication 4,
dans lequel la première bobine est disposée entre la seconde bobine et le second dispositif de génération de champ magnétique (100, 220) ;
dans lequel le second dispositif de génération de champ magnétique est perpendiculaire à une ligne d'interconnexion (103) entre la première bobine et la seconde bobine.

6. Unité de propulsion à champ magnétique (1) de la revendication 4,
dans lequel le second dispositif de génération de champ magnétique est parallèle à une ligne d'interconnexion (103) entre la première bobine et la seconde bobine.

7. Unité de propulsion à champ magnétique (1) de la revendication 6,
dans lequel le second dispositif de génération de champ magnétique est centré le long de sa direction longitudinale entre la première bobine et la seconde bobine.

8. Unité de propulsion à champ magnétique (1) de l'une quelconque des revendications précédentes,
comprenant en outre une unité de blindage (70) en forme de C qui entoure partiellement le premier dispositif de génération de champ magnétique (100, 220) ;
l'unité de collecte d'énergie (60A, 60B, 60C) est disposée au moins partiellement dans l'espace délimité par l'unité de blindage (70) ;
dans lequel l'unité de blindage comprend un matériau conducteur d'électricité.

9. Unité de propulsion à champ magnétique (1) de l'une quelconque des revendications précédentes,
dans lequel le premier dispositif de génération de champ magnétique est une antenne en forme de tige.

10. Unité de propulsion à champ magnétique (1) de l'une quelconque des revendications précédentes,
comprenant en outre une carte de circuit imprimé (PCB) ;
dans lequel le premier dispositif de génération de champ magnétique et le second dispositif de génération de champ magnétique sont disposés sur une surface de la carte de circuit imprimé.

11. Unité de propulsion à champ magnétique (1) de la revendication 10,
dans lequel le premier dispositif de génération de champ magnétique et/ou le second dispositif de génération de champ magnétique sont constitués par des pistes conductrices de la carte de circuit imprimé.

12. Unité de propulsion à champ magnétique (1) de la revendication 10,
dans lequel le second dispositif de génération de champ magnétique est perpendiculaire à une surface de la carte de circuit imprimé.
